# EUROPEAN PATENT APPLICATION

(11) **EP 4 682 980 A1**
(43) Date of publication of application: **21.01.2026**
(21) Application number: 24895507.2
(22) Date of filing: 31.05.2024
(51) Int. Cl.: H01M 4/36, H01M 4/58, H01M 10/0525

(54) **PRECURSOR MATERIAL AND PREPARATION METHOD THEREFOR, POSITIVE ELECTRODE MATERIAL AND PREPARATION METHOD THEREFOR, POSITIVE ELECTRODE SHEET, BATTERY, AND ELECTRIC DEVICE**

(30) Priority: 28.11.2023 CN 202311609836
(71) Applicant: Jiangsu Contemporary Amperex Technology Limited, Changzhou, Jiangsu 213300 (CN); Jiangsu Lithitech Co., Ltd., Changzhou, Jiangsu 213300 (CN)
(72) Inventor: LV, Jiale, Changzhou, Jiangsu 213300 (CN); JIANG, Yao, Changzhou, Jiangsu 213300 (CN); ZHANG, Jicheng, Changzhou, Jiangsu 213300 (CN); GU, Lei, Changzhou, Jiangsu 213300 (CN); GUO, Yongnan, Changzhou, Jiangsu 213300 (CN); LI, Jiawei, Changzhou, Jiangsu 213300 (CN); WANG, Caijun, Changzhou, Jiangsu 213300 (CN); XU, Jiali, Changzhou, Jiangsu 2133000 (CN)
(74) Representative: Lorenz Seidler Gossel Part. mbB
(86) International application number: PCT/CN2024/096630
(87) International publication number: WO 2025/112398

(57) **Abstract**

A precursor material, a method for preparing the precursor material, a positive electrode material, a method for preparing the positive electrode material, a positive electrode plate, a battery, and an electric apparatus. The precursor material includes a compound MnₓFe_{y}M_{(1-x-y)}HPO₄·nH₂O, where 0.9 ≤ x+y < 1,0 < x ≤ 0.9, 0 < y ≤ 0.9, 0 ≤ n ≤ 6, and M includes one or more of transition metal elements other than manganese and iron, Group IIA metal elements, Group IIIA metal elements, and Group IVA metal elements. The precursor material has a uniform distribution of elements and good batch consistency, and a prepared positive electrode material has a uniform distribution of elements and good batch consistency, improving the specific capacity and cycling performance of a battery.

## Description

### CROSS-REFERENCE TO RELATED APPLICATIONS

This application claims priority to Chinese Patent Application No. 202311609836.7, filed on November 28, 2023 and entitled "PRECURSOR MATERIAL AND PREPARATION METHOD THEREOF, POSITIVE ELECTRODE MATERIAL AND PREPARATION METHOD THEREOF, POSITIVE ELECTRODE PLATE, BATTERY, AND ELECTRIC APPARATUS", which is incorporated herein by reference in its entirety.

### TECHNICAL FIELD

This application relates to the field of lithium battery technology, and in particular, to a precursor material, a preparation method of the precursor material, a positive electrode material, a preparation method of the positive electrode material, a positive electrode plate, a battery, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of secondary batteries, higher requirements are imposed on their energy density, cycling performance, and the like.

### SUMMARY

This application is made in view of the above issues, with an objective to provide a precursor material, a preparation method of the precursor material, a positive electrode material, a preparation method of the positive electrode material, a positive electrode plate, a battery, and an electric apparatus. The precursor material of this application has a uniform distribution of elements and good batch consistency, and a prepared positive electrode material has a uniform distribution of elements and good batch consistency, thereby improving the specific capacity and cycling performance of a prepared battery.

To achieve the above objective, a first aspect of this application provides a precursor material including a compound MnₓFe_{y}M_{(1-x-y)}HPO₄·nH₂O, where 0.9 ≤ x+y < 1, 0 < x ≤ 0.9, 0 < y ≤ 0.9, 0 ≤ n ≤ 6, and M includes one or more of transition metal elements other than manganese and iron, Group IIA metal elements, Group IIIA metal elements, and Group IVA metal elements.

The precursor material of this application has a uniform distribution of manganese, iron, phosphorus, and doping elements, with good batch consistency. A positive electrode material prepared using the precursor material of this application has a uniform distribution of elements and good batch consistency, thereby improving electrical properties such as specific capacity and cycling performance of a prepared battery.

In any embodiment, 0.992 ≤ x+y < 0.995; and/or 0.513 ≤ x ≤ 0.658; and/or 0.336 ≤ y ≤ 0.479; and/or 0 ≤ n ≤ 1.

In any embodiment, M includes one or more elements of titanium, magnesium, aluminum, vanadium, zinc, cobalt, nickel, tin, niobium, tungsten, zirconium, tantalum, cerium, and europium.

In any embodiment, a particle size Dᵥ50 of the precursor material is 3 µm to 100 µm, optionally 5 µm to 50 µm, and more optionally 8 µm to 20 µm; and/or
a compacted density of the precursor material at 30 MPa is 1.35 g/cm³ to 2.5 g/cm³; and/or
a mass percentage of the compound MnₓFe_{y}M_{(1-x-y)}HPO₄·nH₂O in the precursor material is 98% to 100%; and/or
the precursor material includes primary crystalline particles with polyhedral morphology.

The particle size Dᵥ50 of the precursor material of this application within the above range facilitates the washing and filtering operations during preparation of a precursor and improves the yield of the precursor material, and facilitates suspension of precursor particles and makes the precursor particles less prone to settling during preparation of the positive electrode material, thereby improving the efficiency of mixing and grinding processes.

The compacted density of the precursor material of this application within the above range helps increase the compacted density of the positive electrode material, thereby increasing the specific capacity of the battery.

The high compound content and low impurity content in the precursor material of this application result in the prepared positive electrode material with low impurity content, thereby improving the specific capacity and cycling performance of the battery.

The precursor material of this application includes the primary crystalline particles with polyhedral morphology, featuring smooth and regular crystal faces and smaller inter-particle gaps, thereby helping increase the compacted density of the precursor material.

A second aspect of this application further provides a method for preparing a precursor material, including the following steps:
dissolving a soluble manganese source, a soluble iron source, and a soluble source of an M element in a solvent to obtain a solution;
slowly adding the solution to a phosphoric acid solution for reaction, optionally followed by aging, to obtain a reaction product; and
filtering the reaction product and drying the resulting filter residue to obtain a precursor material; where
the precursor material includes a compound MnₓFe_{y}M_{(1-x-y)}HPO₄·nH₂O, where 0.9 ≤ x+y < 1, 0 < x ≤ 0.9, 0 < y ≤ 0.9, 0 ≤ n ≤ 6, and the M element includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium.

Thus, in this application, the soluble manganese source, the soluble iron source, and the soluble source of the M element are first prepared into a stable and homogeneous solution, then the solution is slowly added to the phosphoric acid solution to control and reduce side reactions, followed by optional aging and drying of the filtered residue, to obtain a precursor material with uniform composition, good batch consistency, and low impurity content. A positive electrode material prepared using this precursor material has a uniform distribution of elements and good batch consistency, thereby improving the specific capacity and cycling performance of a battery.

In any embodiment, the soluble manganese source includes one or more of a soluble organic manganese source and a soluble inorganic manganese source, optionally including a soluble organic manganese source, more optionally including one or more of soluble organic acid salts of manganese, and further optionally including one or more of manganous acetate, manganous formate, manganous citrate, and manganous 2-hydroxypropionate; and/or
the soluble iron source includes one or more of a soluble organic iron source and a soluble inorganic iron source, optionally including a soluble organic iron source, more optionally including one or more of soluble organic acid salts of iron, and further optionally including one or more of ferrous acetate, ferrous formate, ferrous citrate, and ferrous 2-hydroxypropionate; and/or
the soluble source of the M element includes one or more of a soluble inorganic source of the M element and a soluble organic source of the M element, optionally including one or more of soluble organic acid salts and soluble inorganic acid salts of the M element, and more optionally including one or more of sulfates, nitrates, chlorides, formates, acetates, citrates, and 2-hydroxypropionates of the M element.

The use of the soluble organic manganese source and/or the soluble organic iron source helps reduce the impurity content in the precursor material and improve the batch consistency, thereby improving the specific capacity and cycling performance of the battery.

In any embodiment, the solution is slowly added to the phosphoric acid solution for reaction at 25°C to 95°C; and/or
a feeding duration of the solution is 10 min to 300 min, optionally 15 min to 300 min, and more optionally 60 min to 180 min; and/or
a molar ratio of a phosphoric acid in the phosphoric acid solution to the total metal elements in the solution is 0.4 to 1.5, optionally 0.5 to 1.5, and more optionally 0.8 to 1.2; and/or
a total concentration of metal elements in the solution is 0.1 mol/L to 3.0 mol/L, optionally 0.5 mol/L to 2.5 mol/L, and more optionally 1.0 mol/L to 2.0 mol/L; and/or
a concentration of the phosphoric acid in the phosphoric acid solution is 0.1 mol/L to 3.0 mol/L, optionally 0.5 mol/L to 2.5 mol/L, and more optionally 1.0 mol/L to 2.0 mol/L; and/or
a molar amount of the M element in the solution accounts for 0.1% to 10% of a total molar amount of metal elements; and/or
a molar amount of the Mn element in the solution accounts for 30% to 85% of the total molar amount of metal elements.

In this application, controlling the ambient temperature during the addition of the mixed metal solution to the phosphoric acid solution can reduce side reactions, resulting in the precursor material with uniform composition, good batch consistency, and low impurity content, thereby improving the specific capacity and cycling performance of the battery.

In this application, controlling the velocity of adding the solution to the phosphoric acid solution helps control and reduce side reactions, preparing the precursor material with uniform composition, good batch consistency, and low impurity content, thereby improving the electrical performance of the battery.

In this application, controlling the molar ratio of the phosphoric acid to the total metal elements can increase the specific capacity of the battery.

In this application, controlling the concentration of each metal element in the solution adjusts the molar ratio of each metal element in the precursor product.

In any embodiment, an aging temperature is 40°C to 98°C; and/or
an aging duration is 10 min to 500 min; and/or
the reaction and/or aging is performed under a condition with a pH value of 1.5 to 4.5; and/or
the reaction and/or aging is performed under a stirring condition.

Aging facilitates the growth of precipitate crystals, reducing the proportion of amorphous particles in the precursor material, and obtaining a precursor material with good crystallinity and high compacted density, improving the specific capacity and cycling performance of the battery.

In any embodiment, the dissolving is performed at 25°C to 80°C; and/or
the solvent is water; and/or
the filtering is vacuum filtering, positive-pressure filtering, or centrifugal filtering; and/or
before the drying, the filter residue is washed, and optionally, the filter residue is washed with water; and/or
a drying temperature is 80°C to 500°C, optionally 120°C to 400°C, and more optionally 150°C to 300°C; and/or
a drying duration is 10 min to 300 min.

A third aspect of this application provides a positive electrode material including a compound LiMnₓFe_{y}M_{(1-x-y)}PO₄, where 0.9 ≤ x+y < 1, 0 < x ≤ 0.9, 0 < y ≤ 0.9, and M includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium; and
raw materials for preparing the positive electrode material include the precursor material according to the first aspect of this application or a precursor material prepared by the method according to the second aspect of this application.

A fourth aspect of this application provides a positive electrode material including a core and a coating layer, where the core includes a compound LiMnₓFe_{y}M_{(1-x-y)}PO₄, where 0.9 ≤ x+y < 1, 0 < x ≤ 0.9, 0 < y ≤ 0.9, and M includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium; and the coating layer includes carbon; and
raw materials for preparing the positive electrode material include the precursor material according to the first aspect of this application or a precursor material prepared by the method according to the second aspect of this application.

Thus, the molar ratios of manganese, iron, doping elements, and phosphorus in the precursor material of this application are the same as those in the positive electrode material, reducing the types of raw materials needed during preparation of the positive electrode material, thereby improving the compositional uniformity and batch consistency of the positive electrode material, and improving the specific capacity and cycling performance of a battery.

A fifth aspect of this application provides a method for preparing a positive electrode material, including the following steps:
mixing the precursor material according to the first aspect of this application or a precursor material prepared by the method according to the second aspect of this application with a lithium source in a solvent, grinding, drying, and sintering to obtain a positive electrode material; where
the positive electrode material includes a compound LiMnₓFe_{y}M_{(1-x-y)}PO₄, where 0.9 ≤ x+y < 1, 0 < x ≤ 0.9, 0 < y ≤ 0.9, and M includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium.

A sixth aspect of this application provides a method for preparing a positive electrode material, including the following steps:
mixing the precursor material according to the first aspect of this application or a precursor material prepared by the method according to the second aspect of this application with a lithium source and a carbon source in a solvent, grinding, drying, and sintering to obtain a positive electrode material; where
the positive electrode material includes a core and a coating layer; the core includes a compound LiMnₓFe_{y}M_{(1-x-y)}PO₄, where 0.9 ≤ x+y < 1, 0 < x ≤ 0.9, 0 < y ≤ 0.9, and M includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium; and the coating layer includes carbon.

Thus, the molar ratios of manganese, iron, doping elements, and phosphorus in the precursor material of this application are the same as those in the positive electrode material, so that during preparation of the positive electrode material, only the precursor material needs to be reacted with a lithium source and an optional carbon source, reducing the types of raw materials, improving the compositional uniformity and batch consistency of the positive electrode material, and improving the specific capacity and cycling performance of a battery.

In any embodiment, a molar ratio of the compound MnₓFe_{y}M_{(1-x-y)}HPO₄·nH₂O in the precursor material to a lithium element in the lithium source is 1:(1.0 to 1.1); and/or
a mass ratio of the precursor material to the carbon source is 1:(0.01 to 0.2); and/or
a particle size Dᵥ50 of insoluble materials in the mixture obtained after grinding is 0.1 µm to 7.0 µm, optionally 0.1 µm to 5.0 µm; and/or
the drying is performed using a spray dryer, where the spray dryer has an inlet air temperature of 180°C to 350°C and an outlet air temperature of 90°C to 130°C; and/or
a sintering temperature is 450°C to 800°C; and/or
a sintering duration is 6 h to 20 h; and/or
the sintering is performed in an inert atmosphere.

The insoluble materials in the mixture obtained after grinding achieving a certain particle size Dᵥ50 helps improve the surface energy of the particles, improve solid-solid reaction activity, and shorten a diffusion path of lithium into the crystal interior of the precursor material, making the reaction for generating the positive electrode material more complete, thereby improving the electrical performance of the battery.

The sintering temperature and sintering duration adopted help make the reaction more complete, thereby improving the electrical performance of the battery.

A seventh aspect of this application provides a positive electrode plate including the positive electrode material according to the third or fourth aspect of this application, or a positive electrode material prepared by the method according to the fifth or sixth aspect of this application.

An eighth aspect of this application provides a battery including the positive electrode plate according to the seventh aspect of this application.

A ninth aspect of this application provides an electric apparatus including the battery according to the eighth aspect of this application.

### BRIEF DESCRIPTION OF DRAWINGS

FIG. 1 is a schematic diagram of a battery cell according to an embodiment of this application.
FIG. 2 is an exploded view of the battery cell according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application shown in FIG. 4.
FIG. 6 is a schematic diagram of an electric apparatus using a battery cell as a power source according to an embodiment of this application.
FIG. 7 is a flowchart of a method for preparing a precursor material according to Example 1 of this application.
FIG. 8 is an SEM image of a precursor material prepared in Example 1 of this application.
FIG. 9 is an SEM image of a precursor material prepared in Comparative Example 3 of this application.
FIG. 10 is an elemental analysis EDS image of lithium, manganese, iron, phosphorus, and cobalt of a positive electrode material prepared in Example 1 of this application.

Description of reference signs:
1. battery pack; 2. upper box body; 3. lower box body; 4. battery module; 5. battery cell; 51. housing; 52. electrode assembly; and 53. top cover assembly.

### DESCRIPTION OF EMBODIMENTS

Embodiments that specifically disclose a precursor material, a method for preparing a precursor material, a positive electrode material, a method for preparing a positive electrode material, a positive electrode plate, a negative electrode plate, a battery cell, a battery module, a battery pack, and an electric apparatus in this application are described in detail with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just an abbreviated representation of a combination of these numbers. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, preferably sequentially. For example, a method including steps (a) and (b) indicates that the method may include steps (a) and (b) performed sequentially, or steps (b) and (a) performed sequentially. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Unless otherwise specified, a particle size Dᵥ50 in this application refers to a particle size when a cumulative volume distribution percentage of particles reaches 50%.

### [Battery cell]

A battery cell, also known as a rechargeable battery or a storage battery, refers to a battery whose active material can be activated for continuous use through charging after the battery is discharged.

Typically, a battery cell includes a positive electrode plate, a negative electrode plate, a separator, and an electrolyte. During charging and discharging of the battery, active ions (for example, lithium ions) are intercalated and deintercalated back and forth between the positive electrode plate and the negative electrode plate. The separator is disposed between the positive electrode plate and the negative electrode plate to mainly prevent short circuits between positive and negative electrodes and to allow the active ions to pass through. The electrolyte is located between the positive electrode plate and the negative electrode plate to mainly conduct active ions.

### [Precursor material]

An embodiment of this application provides a precursor material including a compound MnₓFe_{y}M_{(1-x-y)}HPO₄·nH₂O, where 0.9 ≤ x+y < 1 (for example, x+y may be 0.9, 0.95, 0.99, 0.998, 0.999, 0.999, or a range defined by any of these values), 0 < x ≤ 0.9 (for example, x may be 0.1, 0.2, 0.3, 0.4, 0.5, 0.6, 0.7, 0.8, 0.9, or a range defined by any of these values), 0 < y ≤ 0.9 (for example, y may be 0.1, 0.2, 0.3, 0.4, 0.5, 0.6, 0.7, 0.8, 0.9, or a range defined by any of these values), 0 ≤ n ≤ 6 (for example, n may be 0, 1, 2, 3, 4, 5, or 6), and M includes one or more of transition metal elements other than manganese and iron, Group IIA metal elements, Group IIIA metal elements, and Group IVA metal elements.

A conventional preparation method of a lithium manganese iron phosphate positive electrode material with doping elements involves mechanically mixing multiple raw materials such as a manganese source, an iron source, a lithium source, a phosphorus source, and a doping element source, followed by processes such as sand milling for particle refinement, spray drying, and sintering; however, this method is prone to issues such as non-uniform composition, poor batch consistency, and poor electrical performance.

Although the mechanism is not yet clear, the applicant unexpectedly found that the precursor material of this application has a uniform distribution of manganese, iron, phosphorus, and doping elements, with good batch consistency. A positive electrode material prepared using the precursor material of this application has a uniform distribution of elements and good batch consistency, thereby improving electrical properties such as specific capacity and cycling performance of a prepared battery.

In some embodiments, 0.992 ≤ x+y < 0.995; and/or 0.513 ≤ x ≤ 0.658; and/or 0.336 ≤ y ≤ 0.479; and/or 0 ≤ n ≤ 1.

In some embodiments, M includes one or more elements of titanium, magnesium, aluminum, vanadium, zinc, cobalt, nickel, tin, niobium, tungsten, zirconium, tantalum, cerium, and europium.

In some embodiments, a particle size Dᵥ50 of the precursor material is 3 µm to 100 µm, optionally 5 µm to 50 µm, and more optionally 8 µm to 20 µm, for example, 3 µm, 4 µm, 5 µm, 8 µm, 10 µm, 15 µm, 20 µm, 25 µm, 30 µm, 35 µm, 40 µm, 45 µm, 50 µm, 55 µm, 60 µm, 70 µm, 80 µm, 90 µm, 100 µm, or a range defined by any of these values.

The particle size Dᵥ50 of the precursor material of this application within the above range facilitates the washing and filtering operations during preparation of a precursor and improves the yield of the precursor material, and facilitates suspension of precursor particles and makes the precursor particles less prone to settling during preparation of the positive electrode material, thereby improving the efficiency of mixing and grinding processes.

In this application, the particle size Dᵥ50 can be tested using conventional methods in the art. For example, a sample is added to deionized water to fully disperse the sample, and a laser particle size analyzer (MasterSizer 2000) is used to test the particle size Dᵥ50.

In some embodiments, a compacted density of the precursor material at 30 MPa is 1.35 g/cm³ to 2.5 g/cm³, optionally 1.5 g/cm³ to 2.5 g/cm³, for example, 1.35 g/cm³, 1.5 g/cm³, 1.7 g/cm³, 1.9 g/cm³, 2.0 g/cm³, 2.1 g/cm³, 2.2 g/cm³, 2.3 g/cm³, 2.4 g/cm³, 2.5 g/cm³, or a range defined by any of these values.

The compacted density of the precursor material of this application within the above range helps improve the compacted density of the positive electrode material, thereby increasing the specific capacity of the battery.

In this application, the compacted density can be tested using conventional methods in the art. For example, a sample is placed in a mold of a compacted density tester, a pressure of 30 MPa is automatically applied to powder until the powder is compacted, a volume of the powder can be calculated based on a cross-sectional area of the mold and the thickness of the powder at this point, and a compacted density of the powder material can be tested according to a formula: a compacted density is equal to mass/volume.

In some embodiments, a mass percentage of the compound MnₓFe_{y}M_{(1-x-y)}HPO₄·nH₂O in the precursor material is 98% to 100%, for example, 98.5%, 99%, 99.5%, 100%, or a range defined by any of these values.

The high compound content and low impurity content in the precursor material of this application result in the prepared positive electrode material with low impurity content, thereby improving the specific capacity and cycling performance of the battery.

In some embodiments, the precursor material includes primary crystalline particles with polyhedral morphology.

The precursor material of this application includes the primary crystalline particles with polyhedral morphology, featuring smooth and regular crystal faces and smaller inter-particle gaps, thereby helping increase the compacted density of the precursor material.

### [Method for preparing precursor material]

An embodiment of this application provides a method for preparing a precursor material, including the following steps:
dissolving a soluble manganese source, a soluble iron source, and a soluble source of an M element in a solvent to obtain a solution;
slowly adding the solution to a phosphoric acid solution for reaction, optionally followed by aging, to obtain a reaction product; and
filtering the reaction product and drying the resulting filter residue to obtain a precursor material; where
the precursor material includes a compound MnₓFe_{y}M_{(1-x-y)}HPO₄·nH₂O, where 0.9 ≤ x+y < 1 (for example, x+y may be 0.9, 0.95, 0.99, 0.998, 0.999, 0.999, or a range defined by any of these values), 0 < x ≤ 0.9 (for example, x may be 0.1, 0.2, 0.3, 0.4, 0.5, 0.6, 0.7, 0.8, 0.9, or a range defined by any of these values), 0 < y ≤ 0.9 (for example, y may be 0.1, 0.2, 0.3, 0.4, 0.5, 0.6, 0.7, 0.8, 0.9, or a range defined by any of these values), 0 ≤ n ≤ 6 (for example, n may be 0, 1, 2, 3, 4, 5, or 6), and the M element includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium.

Phosphoric acid can dissociate into various ions, and the co-precipitation reaction between metal ions and ions dissociated from phosphoric acid is complex, with many side reactions, easily producing byproducts such as gel-like, flocculent, or amorphous particles. The resulting co-precipitate is generally a mixture of multiple precipitates, making it difficult to obtain a precursor material with uniform composition, good batch consistency, and low impurity content.

Thus, in this application, the soluble manganese source, the soluble iron source, and the soluble source of the M element are first prepared into a stable and homogeneous solution, then the solution is slowly added to the phosphoric acid solution to control and reduce side reactions, followed by optional aging and drying of the filtered residue, to obtain a precursor material with uniform composition, good batch consistency, and low impurity content. A positive electrode material prepared using this precursor material has a uniform distribution of elements and good batch consistency, thereby improving the specific capacity and cycling performance of a battery.

In some embodiments, the precursor material is the precursor material described above.

In some embodiments, the soluble manganese source includes one or more of a soluble organic manganese source and a soluble inorganic manganese source, optionally including a soluble organic manganese source, more optionally including one or more of soluble organic acid salts of manganese, and further optionally including one or more of manganous acetate, manganous formate, manganous citrate, and manganous 2-hydroxypropionate.

In some embodiments, the soluble iron source includes one or more of a soluble organic iron source and a soluble inorganic iron source, optionally including a soluble organic iron source, more optionally including one or more of soluble organic acid salts of iron, and further optionally including one or more of ferrous acetate, ferrous formate, ferrous citrate, and ferrous 2-hydroxypropionate.

The use of the soluble organic manganese source and/or the soluble organic iron source helps reduce the impurity content in the precursor material and improve the batch consistency, thereby improving the specific capacity and cycling performance of the battery.

In some embodiments, the soluble source of the M element includes one or more of a soluble inorganic source of the M element and a soluble organic source of the M element, optionally including one or more of soluble organic acid salts and soluble inorganic acid salts of the M element, and more optionally including one or more of sulfates, nitrates, chlorides, formates, acetates, citrates, and 2-hydroxypropionates of the M element.

In some embodiments, the solution is slowly added to the phosphoric acid solution for reaction at 25°C to 95°C, optionally 30°C to 90°C (for example, 35°C, 40°C, 45°C, 50°C, 55°C, 60°C, 65°C, 70°C, 75°C, 80°C, 85°C, 90°C, or a range defined by any of these values).

In this application, controlling the ambient temperature during the addition of the mixed metal solution to the phosphoric acid solution can reduce side reactions, resulting in the precursor material with uniform composition, good batch consistency, and low impurity content, thereby improving the specific capacity and cycling performance of the battery.

In some embodiments, a feeding duration of the solution is 10 min to 300 min, optionally 15 min to 300 min, more optionally 60 min to 180 min, and further optionally 90 min to 120 min, for example, 10 min, 20 min, 30 min, 40 min, 50 min, 60 min, 70 min, 80 min, 90 min, 100 min, 110 min, 120 min, 130 min, 150 min, 160 min, 180 min, 190 min, 200 min, 220 min, 240 min, 260 min, 280 min, 300 min, or a range defined by any of these values.

In some embodiments, a molar ratio of a phosphoric acid in the phosphoric acid solution to the total metal elements in the solution is 0.4 to 1.5, optionally 0.5 to 1.5, more optionally 0.8 to 1.2, and further optionally 0.9 to 1.1, for example, 0.4, 0.5, 0.6, 0.7, 0.8, 0.9, 1.0, 1.1, 1.2, 1.3, 1.4, 1.5, or a range defined by any of these values.

In this application, controlling the molar ratio of the phosphoric acid to the total metal elements can increase the specific capacity of the battery.

In some embodiments, a total concentration of metal elements in the solution is 0.1 mol/L to 3.0 mol/L, optionally 0.5 mol/L to 2.5 mol/L, and more optionally 1.0 mol/L to 2.0 mol/L, for example, 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1.0 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L, 2.0 mol/L, 2.1 mol/L, 2.2 mol/L, 2.3 mol/L, 2.4 mol/L, 2.5 mol/L, 2.6 mol/L, 2.8 mol/L, 2.9 mol/L, 3.0 mol/L, or a range defined by any of these values.

In some embodiments, a concentration of the phosphoric acid in the phosphoric acid solution is 0.1 mol/L to 3.0 mol/L, optionally 0.5 mol/L to 2.5 mol/L, and more optionally 1.0 mol/L to 2.0 mol/L, for example, 0.1 mol/L, 0.2 mol/L, 0.4 mol/L, 0.5 mol/L, 0.6 mol/L, 0.7 mol/L, 0.9 mol/L, 1.0 mol/L, 1.1 mol/L, 1.3 mol/L, 1.5 mol/L, 1.7 mol/L, 1.9 mol/L, 2.0 mol/L, 2.1 mol/L, 2.3 mol/L, 2.5 mol/L, 2.7 mol/L, 2.8 mol/L, 2.9 mol/L, 3.0 mol/L, or a range defined by any of these values.

In this application, controlling the velocity of adding the solution to the phosphoric acid solution helps control and reduce side reactions, preparing the precursor material with uniform composition, good batch consistency, and low impurity content, thereby improving the electrical performance of the battery.

In some embodiments, a molar amount of the M element in the solution accounts for 0.1% to 10% of a total molar amount of metal elements, for example, 0.3%, 0.5%, 1%, 3%, 5%, 7%, 9%, 10%, or a range defined by any of these values.

In some embodiments, the molar amount of the Mn element in the solution accounts for 30% to 85% of the total molar amount of metal elements, for example, 35%, 40%, 45%, 50%, 55%, 58%, 60%, 65%, 70%, 75%, 80%, 85%, or a range defined by any of these values.

In this application, controlling the concentration of each metal element in the solution adjusts the molar ratio of each metal element in the precursor product.

In some embodiments, an aging temperature is 40°C to 98°C, optionally 60°C to 95°C, for example, 40°C, 45°C, 50°C, 55°C, 60°C, 65°C, 70°C, 75°C, 80°C, 85°C, 90°C, 95°C, 98°C, or a range defined by any of these values.

In some embodiments, an aging duration is 10 min to 500 min, optionally 30 min to 300 min, for example, 10 min, 20 min, 30 min, 40 min, 50 min, 70 min, 100 min, 120 min, 150 min, 170 min, 190 min, 200 min, 240 min, 270 min, 300 min, 330 min, 350 min, 380 min, 400 min, 420 min, 440 min, 460 min, 480 min, 500 min, or a range defined by any of these values.

In some embodiments, the reaction and/or aging is performed under a condition with a pH value of 1.5 to 4.5. For example, the pH value is 1.5, 2, 2.5, 3, 3.5, 4, 4.5, or a range defined by any of these values.

In some embodiments, the reaction and/or aging is performed under a stirring condition.

Aging facilitates the growth of precipitate crystals, reducing the proportion of amorphous particles in the precursor material, and obtaining a precursor material with good crystallinity and high compacted density, thereby improving the specific capacity and cycling performance of the battery.

In some embodiments, the dissolving is performed at 25°C to 80°C (for example, 25°C, 30°C, 35°C, 40°C, 45°C, 50°C, 55°C, 60°C, 65°C, 70°C, 75°C, 80°C, or a range defined by any of these values); and/or
the solvent is water.

In some embodiments, the filtering is vacuum filtering, positive-pressure filtering, or centrifugal filtering.

In some embodiments, before the drying, the filter residue is washed, and optionally, the filter residue is washed with water.

In some embodiments, a drying temperature is 80°C to 500°C, optionally 120°C to 400°C, and more optionally 150°C to 300°C.

In some embodiments, a drying duration is 10 min to 300 min.

### [Positive electrode material]

An embodiment of this application provides a positive electrode material including a compound LiMnₓFe_{y}M_{(1-x-y)}PO₄, where 0.9 ≤ x+y < 1 (for example, x+y may be 0.9, 0.95, 0.99, 0.998, 0.999, 0.999, or a range defined by any of these values), 0 < x ≤ 0.9 (for example, x may be 0.1, 0.2, 0.3, 0.4, 0.5, 0.6, 0.7, 0.8, 0.9, or a range defined by any of these values), 0 < y ≤ 0.9 (for example, y may be 0.1, 0.2, 0.3, 0.4, 0.5, 0.6, 0.7, 0.8, 0.9, or a range defined by any of these values), and M includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium; and
raw materials for preparing the positive electrode material include the precursor material described above or a precursor material prepared by the method described above.

Another embodiment of this application provides a positive electrode material including a core and a coating layer, where the core includes a compound LiMnₓFe_{y}M_{(1-x-y)}PO₄, where 0.9 ≤ x+y < 1 (for example, x+y may be 0.9, 0.95, 0.99, 0.998, 0.999, 0.999, or a range defined by any of these values), 0 < x ≤ 0.9 (for example, x may be 0.1, 0.2, 0.3, 0.4, 0.5, 0.6, 0.7, 0.8, 0.9, or a range defined by any of these values), 0 < y ≤ 0.9 (for example, y may be 0.1, 0.2, 0.3, 0.4, 0.5, 0.6, 0.7, 0.8, 0.9, or a range defined by any of these values), and M includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium; and the coating layer includes carbon;
raw materials for preparing the positive electrode material include the precursor material described above or a precursor material prepared by the method described above.

Thus, the molar ratios of manganese, iron, doping elements, and phosphorus in the precursor material of this application are the same as those in the positive electrode material, reducing the types of raw materials needed during preparation of the positive electrode material, thereby improving the compositional uniformity and batch consistency of the positive electrode material, and improving the specific capacity and cycling performance of the battery.

### [Method for preparing positive electrode material]

An embodiment of this application provides a method for preparing a positive electrode material, including the following steps:
mixing the precursor material described above or a precursor material prepared by the method described above with a lithium source in a solvent, grinding, drying, and sintering to obtain a positive electrode material; where
the positive electrode material includes a compound LiMnₓFe_{y}M_{(1-x-y)}PO₄, where 0.9 ≤ x+y < 1, 0 < x ≤ 0.9, 0 < y ≤ 0.9, and M includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium.

Another embodiment of this application provides a method for preparing a positive electrode material, including the following steps:
mixing the precursor material described above or a precursor material prepared by the method described above with a lithium source and a carbon source in a solvent, grinding, drying, and sintering to obtain a positive electrode material; where
the positive electrode material includes a core and a coating layer; the core includes a compound LiMnₓFe_{y}M_{(1-x-y)}PO₄, where 0.9 ≤ x+y < 1, 0 < x ≤ 0.9, 0 < y ≤ 0.9, and M includes one or more of transition metal elements other than manganese and iron, Group IIA metal elements, Group IIIA metal elements, and Group IVA metal elements, optionally including one or more elements of titanium, magnesium, aluminum, vanadium, zinc, cobalt, nickel, tin, niobium, tungsten, zirconium, tantalum, cerium, and europium; and the coating layer includes carbon.

Thus, the molar ratios of manganese, iron, doping elements, and phosphorus in the precursor material of this application are the same as those in the positive electrode material, so that during preparation of the positive electrode material, only the precursor material needs to be reacted with a lithium source and an optional carbon source, reducing the types of raw materials, improving the compositional uniformity and batch consistency of the positive electrode material, and improving the specific capacity and cycling performance of a battery.

In some embodiments, a molar ratio of the compound MnₓFe_{y}M_{(1-x-y)}HPO₄·nH₂O in the precursor material to a lithium element in the lithium source is 1:(1.0 to 1.1).

In some embodiments, a mass ratio of the precursor material to the carbon source is 1:(0.01 to 0.2), for example, 1:0.01, 1:0.02, 1:0.03, 1:0.05, 1:0.07, 1:0.09, 1:0.1, 1:0.12, 1:0.15, 1:0.16, 1:0.17, 1:0.18, 1:0.19, 1:0.2, or a range defined by any of these values.

In some embodiments, a particle size Dᵥ50 of insoluble materials in the mixture obtained after grinding is 0.1 µm to 7.0 µm, optionally 0.1 µm to 5.0 µm, for example, 0.1 µm, 0.3 µm, 0.5 µm, 0.7 µm, 0.9 µm, 1.0 µm, 1.4 µm, 1.6 µm, 1.8 µm, 2.0 µm, 2.2 µm, 2.5 µm, 2.7 µm, 2.8 µm, 3.0 µm, 3.3 µm, 3.6 µm, 3.8 µm, 4.0 µm, 4.2 µm, 4.5 µm, 4.7 µm, 5.0 µm, 5.3 µm, 5.5 µm, 5.7 µm, 6.0 µm, 6.3 µm, 6.5 µm, 6.7 µm, 7 µm, or a range defined by any of these values.

The insoluble materials in the mixture obtained after grinding achieving a certain particle size Dᵥ50 helps improve the surface energy of the particles, improve solid-solid reaction activity, and shorten a diffusion path of lithium into the crystal interior of the precursor material, making the reaction for generating the positive electrode material more complete, thereby improving the electrical performance of the battery.

In some embodiments, the drying is performed using a spray dryer, where the spray dryer has an inlet air temperature of 180°C to 350°C and an outlet air temperature of 90°C to 130°C.

In some embodiments, a sintering temperature is 450°C to 800°C, for example, 500°C, 550°C, 600°C, 650°C, 700°C, 750°C, 800°C, or a range defined by any of these values.

In some embodiments, a sintering duration is 6 h to 20 h, for example, 6 h, 8 h, 9 h, 10 h, 12 h, 14 h, 15 h, 17 h, 18 h, 19 h, 20 h, or a range defined by any of these values.

In some embodiments, the sintering is performed in an inert atmosphere.

The sintering temperature and sintering duration adopted help make the reaction more complete, thereby improving the electrical performance of the battery.

### [Positive electrode plate]

The positive electrode plate typically includes a positive electrode current collector and a positive electrode film layer disposed on at least one surface of the positive electrode current collector, where the positive electrode film layer includes the positive electrode material described above or a positive electrode material prepared by the method described above.

During charging and discharging of a battery, deintercalation and consumption of Li occur, and the molar content of Li in the battery varies at different states of discharge. In the enumeration of the positive electrode material in this application, the molar content of Li is an initial state of the material, that is, a state before feeding. The molar content of Li varies after the positive electrode material is applied to a battery system and undergoes charge and discharge cycles.

In the enumeration of the positive electrode material in this application, the molar content of 0 is only a theoretical state value, and lattice oxygen release causes the molar content of oxygen to vary, resulting in fluctuations in the actual molar content of O.

For example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, for example, the positive electrode material may further include the following materials: lithium transition metal oxides and their modified compounds. However, this application is not limited to these materials, and other conventional materials that can be used as positive electrode active materials for batteries may also be used. Examples of the lithium transition metal oxides may include but are not limited to at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), lithium nickel cobalt aluminum oxide (for example, LiNi_{0.85}Co_{0.15}Al_{0.05}O₂), and their modified compounds.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared by the following method: the components for preparing the positive electrode plate, such as the positive electrode active material, the conductive agent, the binder, and any other components, are dispersed in a solvent (for example, N-methylpyrrolidone) to form a positive electrode slurry; and the positive electrode slurry is applied on the positive electrode current collector, followed by processes such as drying and cold pressing, to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as negative electrode active materials for batteries may also be used. These negative electrode active materials may be used alone or in combination of two or more.

In some embodiments, the negative electrode film layer further optionally includes a binder. For example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives, such as a thickener (for example, sodium carboxymethyl cellulose (CMC-Na)).

In some embodiments, the negative electrode plate may be prepared by the following method: the components for preparing the negative electrode plate, such as the negative electrode active material, the conductive agent, the binder, and any other components, are dispersed in a solvent (for example, deionized water) to form a negative electrode slurry; and the negative electrode slurry is applied on the negative electrode current collector, followed by processes such as drying and cold pressing, to obtain the negative electrode plate.

### [Electrolyte]

The electrolyte conducts ions between the positive electrode plate and the negative electrode plate. This application does not specifically limit the type of the electrolyte. The electrolyte can be selected based on needs. For example, the electrolyte may be in a liquid state, a gel state, or an all-solid state.

In some embodiments, the electrolyte is in a liquid state and includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalate)borate, lithium bis(oxalate)borate, lithium difluoro(bis(oxalate))phosphate, and lithium tetrafluoro(oxalate)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte further optionally includes an additive. For example, the additive may include a negative electrode film-forming additive and a positive electrode film-forming additive, and may further include an additive that can improve some performance of the battery, for example, an additive for improving overcharge performance of the battery and an additive for improving high-temperature performance or low-temperature performance of the battery.

### [separator]

In some embodiments, the battery cell further includes a separator. This application does not particularly limit the type of the separator, and the separator may be any well-known porous separator with good chemical stability and mechanical stability.

In some embodiments, the material of the separator may be selected from at least one of glass fiber, nonwoven fabric, polyethylene, polypropylene, and polyvinylidene fluoride. The separator may be a single-layer film or a multilayer composite film, without particular limitation. When the separator is a multilayer composite film, the materials of the layers may be the same or different, without particular limitation.

In some embodiments, the positive electrode plate, the negative electrode plate, and the separator may be made into an electrode assembly through a winding process or a stacking process.

In some embodiments, the battery cell may include an outer package. The outer package may be used to encapsulate the electrode assembly and electrolyte described above.

In some embodiments, the outer package of the battery cell may be a hard shell, for example, a hard plastic shell, an aluminum shell, or a steel shell. The outer package of the battery cell may alternatively be a soft pack, for example, a soft pouch. The material of the soft pack may be plastic. As the plastic, polypropylene, polybutylene terephthalate, polybutylene succinate, and the like may be listed.

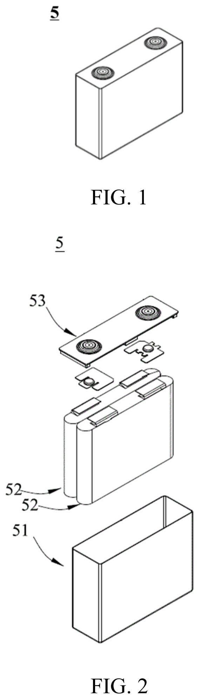

This application does not particularly limit the shape of the battery cell. The battery cell may be cylindrical, rectangular, or of any other shapes. For example, FIG. 1 shows a battery cell 5 with a rectangular structure as an example.

In some embodiments, referring to FIG. 2, the outer package may include a housing 51 and a cover plate 53. The housing 51 may include a bottom plate and side plates connected to the bottom plate, with the bottom plate and side plates enclosing to form an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through a winding process or a stacking process. The electrode assembly 52 is encapsulated in the accommodating cavity. The electrolyte infiltrates the electrode assembly 52. The battery cell 5 may include one or more electrode assemblies 52, and persons skilled in the art may select based on specific actual needs.

In some embodiments, the battery cell may be assembled into a battery module, and the battery module may include one or more battery cells. The specific quantity may be chosen by persons skilled in the art according to the application and capacity of the battery module.

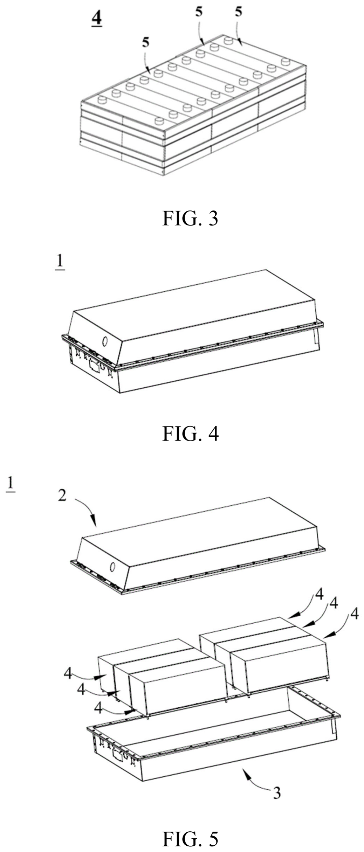

FIG. 3 shows a battery module 4 as an example. Referring to FIG. 3, in the battery module 4, multiple battery cells 5 may be arranged sequentially along a length direction of the battery module 4. Certainly, the battery cells may alternatively be arranged in any other manners. Further, the multiple battery cells 5 may be fixed by fasteners.

Optionally, the battery module 4 may further include an enclosure with an accommodating space, and the multiple battery cells 5 are accommodated in the accommodating space.

In some embodiments, the battery module may be further assembled into a battery pack, and the battery pack may include one or more battery modules. The specific quantity may be chosen by persons skilled in the art according to the application and capacity of the battery pack.

FIG. 4 and FIG. 5 show a battery pack 1 as an example. Referring to FIG. 4 and FIG. 5, the battery pack 1 may include a battery box and multiple battery modules 4 disposed in the battery box. The battery box includes an upper box body 2 and a lower box body 3, where the upper box body 2 can fit the lower box body 3 to form a closed space for accommodating the battery modules 4. The multiple battery modules 4 may be arranged in the battery box in any manner.

In addition, this application further provides an electric apparatus. The electric apparatus includes at least one of the battery cell, battery module, or battery pack provided by this application. The battery cell, the battery module, or the battery pack may be used as a power source for the electric apparatus or as an energy storage unit for the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

As an electric apparatus, a battery cell, a battery module, or a battery pack may be selected based on requirements for using the electric apparatus.

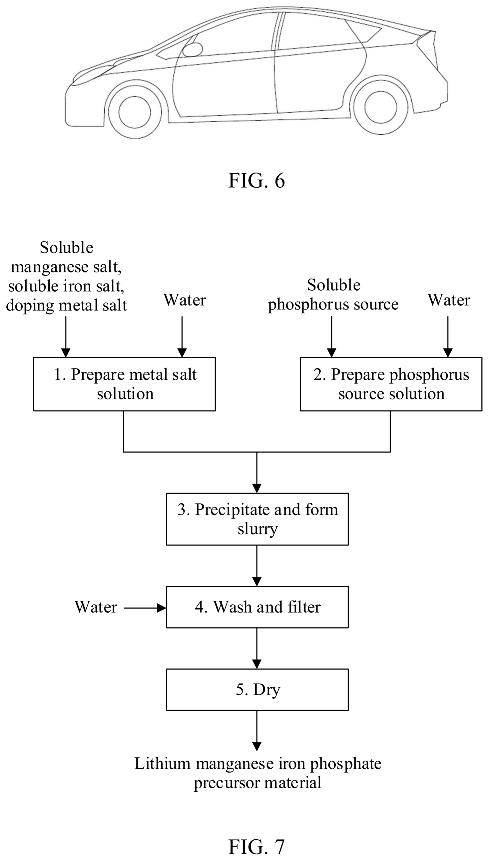

FIG. 6 shows an electric apparatus as an example. The electric apparatus is a battery electric vehicle, a hybrid electric vehicle, a plug-in hybrid electric vehicle, or the like. To satisfy requirements of the electric apparatus for high power and high energy density of a battery cell, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### (1) Preparation of precursor material (as shown in FIG. 7):

2.866 mol of manganous acetate, 1.910 mol of ferrous acetate, and 0.024 mol of cobalt sulfate were added to a mixing tank at a molar ratio of Mn:Fe:Co=0.597:0.398:0.005, and pure water was added to achieve a total metal ion molar concentration of 1.60 mol/L, followed by stirring to dissolve, enabling a stirring function and a water bath heating function, heat the resulting solution to 40°C, and maintaining the temperature; and after the powder was completely dissolved, 3.0 L of a metal salt solution was obtained for later use.

5.280 mol of a concentrated phosphoric acid with a solute mass concentration of 85% was added to a mixing tank at a molar ratio of the total metal ions to phosphorus of 1:1.100, and pure water was added to achieve a phosphoric acid solution molar concentration of 1.32 mol/L, followed by stirring well, enabling a water bath heating function, heating the resulting solution to 60°C, and maintaining the temperature, to obtain 4.0 L of a phosphoric acid solution for later use.

A water bath temperature of the phosphoric acid solution was maintained at 60°C; under a stirring condition, the metal salt solution was uniformly added to the phosphoric acid solution using a metering pump and mixed for reaction, where a volume flow rate of the metal salt solution was set to be approximately 0.03 L/min, and a duration for the solution to be completely added was controlled within 100 min; after the addition was completed, the solution was heated to 85°C under a stirring condition and continued to be aged for 120 min to make the reaction complete; and a slurry was obtained. At this point, an online pH meter was used to test system pH values ranged from 2 to 3 during the feeding, reaction, and aging processes.

The slurry was transferred to a vacuum filtration device with a maximum vacuum pressure of -0.06 MPa; then filtering was performed to collect a solid precipitate; approximately 3.6 L of pure water was added for online washing to obtain a precursor filter cake; and the precursor filter cake was transferred to a forced-air drying oven and dried at a drying temperature of 150°C for 120 min. At this point, the material was essentially constant in weight, and a precursor material was obtained.

### (2) Preparation of positive electrode material:

510.28 g of the precursor material (where a mass percentage of the compound in the precursor material was 99.0%, and the amount of substance was 3.000 mol) and 110.84 g of lithium carbonate (where the amount of substance of the lithium element in lithium carbonate was 3.000 mol) were weighed at a molar ratio of the compound in the precursor material to the lithium element in the lithium source of 1:1; 61.23 g of glucose was weighed at a mass ratio of the precursor material to the carbon source of 1:0.12; the above materials were added together to 1443.36 g of pure water and mixed well; the resulting mixture was ground in a ball mill to a particle size Dᵥ50 of 0.8 µm, to obtain a slurry; the slurry was dried using spray drying with an inlet air temperature of 220°C and an outlet air temperature of 105°C, to obtain powder; and in a nitrogen atmosphere, the powder was sintered in an atmosphere box furnace at 700°C for 12 h, and a positive electrode material was obtained.

### (3) Preparation of positive electrode plate:

0.3000 g of a binder polyvinylidene fluoride (PVDF) was weighed using an analytical balance (with a precision of 0.0001 g), added to 10.8 g of N-methylpyrrolidone (NMP), and stirred until the binder was completely dissolved; 2.4000 g of the above positive electrode material and 0.3000 g of a carbon black conductive agent (SP) were added and stirred well to obtain a paste; and the paste was uniformly applied onto an aluminum foil using a coater, dried in a vacuum drying oven to remove the solvent NMP, followed by rolling and punching to obtain a disc with a diameter of 16.0 mm as a positive electrode plate.

(4) Negative electrode plate: A metallic lithium plate was used.

(5) Separator: A PE-PP composite film was used.

(6) Preparation of electrolyte:
Ethylene carbonate (EC) and dimethyl carbonate (DMC) were mixed at a volume ratio of 1:1, then LiPF₆ was dissolved well in the above solution to obtain an electrolyte. In the electrolyte, a concentration of LiPF₆ was 1 mol/L.

(7) Preparation of button battery:
The above positive electrode plate, separator, negative electrode plate, and electrolyte were assembled into a CR2032 button battery.

Preparation methods of batteries in Examples 2 to 33 and Comparative Examples 1 and 2 were similar to the preparation method of the battery preparation method in Example 1, with different preparation methods and product parameters shown in Tables 1 to 3.

### Example 32

### (1) Preparation of precursor material:

2.866 mol of manganous acetate, 1.910 mol of ferrous acetate, and 0.024 mol of cobalt sulfate were added to a mixing tank at a molar ratio of Mn:Fe:Co=0.597:0.398:0.005, and pure water was added to achieve a total metal ion molar concentration of 1.60 mol/L, followed by stirring to dissolve, enabling a water bath heating function, heating the resulting solution to 40°C, and maintaining the temperature; and after the powder was completely dissolved, 3.0 L of a metal salt solution was obtained for later use.

5.280 mol of a concentrated phosphoric acid with a solute mass concentration of 85% was added to a mixing tank at a molar ratio of total metal ions to phosphorus of 1:1.100, and pure water was added to achieve a phosphoric acid solution molar concentration of 1.32 mol/L, followed by stirring well, enabling a water bath heating function, heating the resulting solution to 60°C, and maintaining the temperature, to obtain 4.0 L of a phosphoric acid solution for later use.

A water bath temperature of the phosphoric acid solution was maintained at 60°C; under a stirring condition, the metal salt solution was added all at once to the phosphoric acid solution and mixed for reaction. At this point, a mixed slurry was obtained. An online pH meter was used to test system pH values ranged from 2 to 3 during the feeding and reaction processes.

The slurry was transferred to a vacuum filtration device with a maximum vacuum pressure of -0.06 MPa; then filtering was performed to collect a solid precipitate; approximately 3.6 L of pure water was added for online washing, to obtain a precursor filter cake; and the precursor filter cake was transferred to a forced-air drying oven and dried at a drying temperature of 150°C for 120 min. At this point, the material was essentially constant in weight, and a precursor material was obtained.

Steps (2) to (7) were the same as steps (2) to (7) in Example 1.

### Example 33

### (1) Preparation of precursor material:

3.582 mol of manganese chloride, 2.388 mol of ferrous chloride, and 0.030 mol of cobaltous chloride were added to a mixing tank at a molar ratio of Mn:Fe:Co=0.597:0.398:0.005, and pure water was added to achieve a total metal ion molar concentration of 1.6 mol/L, followed by stirring to dissolve, enabling a water bath heating function, heating the resulting solution to 40°C, and maintaining the temperature; and after the powder was completely dissolved, 6.0 L of a metal salt solution was obtained for later use.

7.2 mol of disodium hydrogen phosphate was added to a mixing tank at a molar ratio of total metal ions to phosphorus of 1:1.1, and pure water was added to achieve a disodium hydrogen phosphate solution molar concentration of 1.0 mol/L, followed by stirring to dissolve, enabling a water bath heating function, heating the resulting solution to 60°C, and maintaining the temperature, to obtain 7.2 L of a phosphorus source solution for later use.

A water bath temperature of a phosphorus source solution was maintained at 60°C; and under a stirring condition, the metal salt solution was uniformly added to the phosphorus source solution using a metering pump and mixed for reaction, where a volume flow rate of the metal salt solution was set to be approximately 0.06 L/min, and a duration for the solution to be completely added was controlled within 100 min. At this point, a mixed slurry was obtained. An online pH meter was used to test system pH values ranged from 4 to 6 during the feeding and reaction processes.

The slurry was transferred to a vacuum filtration device with a maximum vacuum pressure of -0.06 MPa; then filtering was performed to collect a solid precipitate; approximately 3.6 L of pure water was added for online washing, to obtain a precursor filter cake; and the precursor filter cake was transferred to a forced-air drying oven and dried at a drying temperature of 300°C for 120 min. At this point, the material was essentially constant in weight, and a precursor material was obtained.

### (2) Preparation of positive electrode material:

516.01 g of the precursor material (where a mass percentage of the compound in the precursor material was 97.90%, and the amount of substance was 3.000 mol) and 110.84 g of lithium carbonate (where the amount of substance of the lithium element in lithium carbonate was 3.000 mol) were weighed at a molar ratio of the compound in the precursor material to the lithium element in the lithium source of 1:1; 61.92 g of glucose was weighed at a mass ratio of the precursor material to the carbon source of 1:0.12; the above materials were added together to 1443.36 g of pure water and mixed well; the resulting mixture was ground in a ball mill to a particle size Dᵥ50 of 0.8 µm, to obtain a slurry; the slurry was dried using spray drying with an inlet air temperature of 220°C and an outlet air temperature of 105°C, to obtain powder; and in a nitrogen atmosphere, the powder was sintered in an atmosphere box furnace at 700°C for 12 h, and a positive electrode material was obtained.

Steps (3) to (7) were the same as steps (3) to (7) in Example 1.

### Comparative Example 1

### (1) Preparation of positive electrode material:

2.400 mol of lithium carbonate and 4.800 mol of a concentrated phosphoric acid with a solute mass concentration of 85% were first added to 5945.63 g of pure water at a molar ratio of Li:Mn:Fe:Co:PO₄=1.000:0.597:0.398:0.005:1.000 and mixed for reaction, to obtain a lithium dihydrogen phosphate solution; then, 2.866 mol of manganous oxalate, 1.910 mol of ferrous oxalate, 0.024 mol of cobaltous oxalate, and 61.23 g of glucose were added and mixed well; the resulting mixture was ground in a ball mill to a particle size Dᵥ50 of 0.8 µm, to obtain a slurry; the slurry was dried using spray drying with an inlet air temperature of 220°C and an outlet air temperature of 105°C, to obtain powder; and in a nitrogen atmosphere, the powder was sintered in an atmosphere box furnace at 700°C for 12 h, and a positive electrode material was obtained.

Steps (2) to (6) were the same as steps (3) to (7) in Example 1.

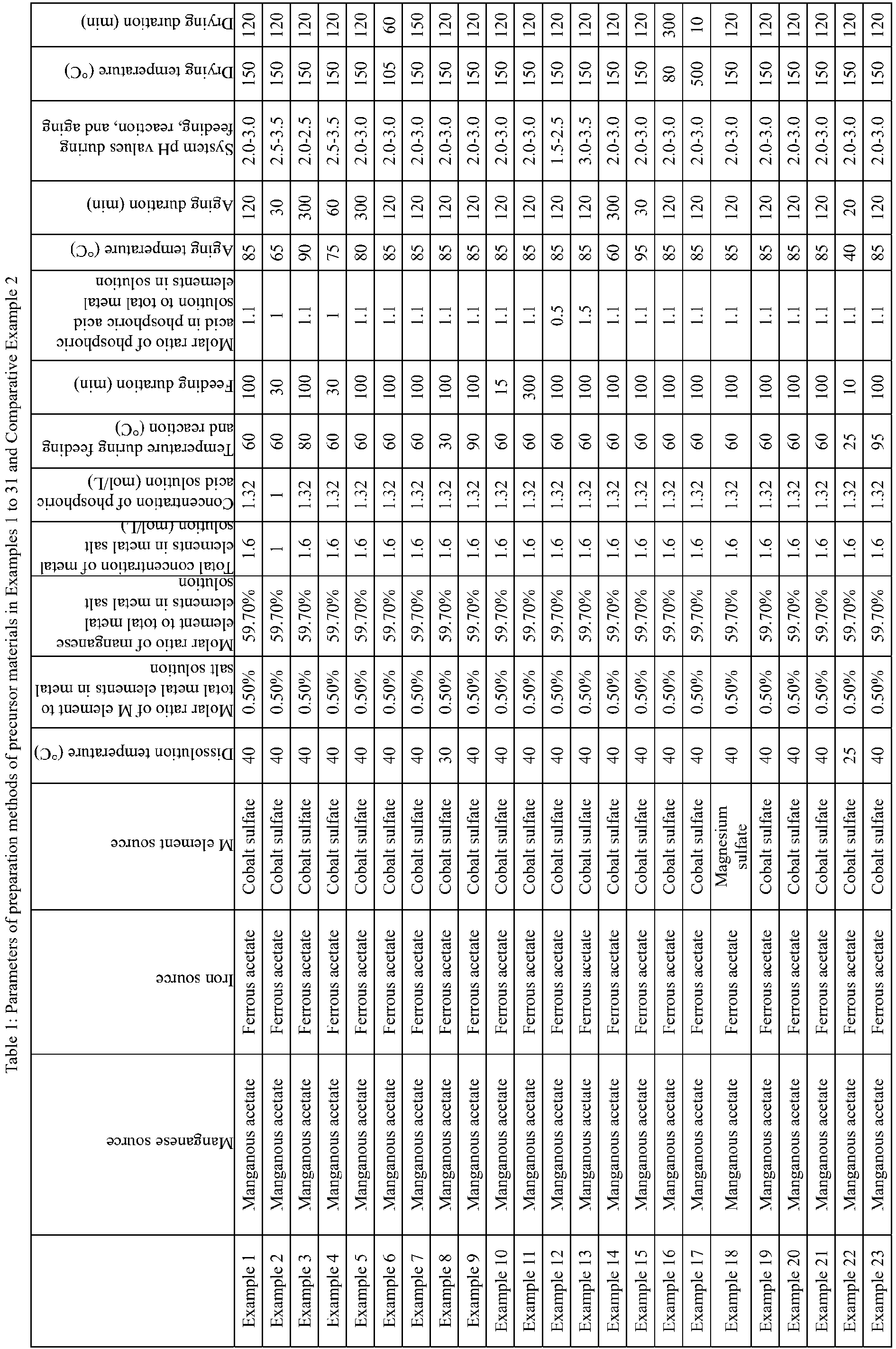

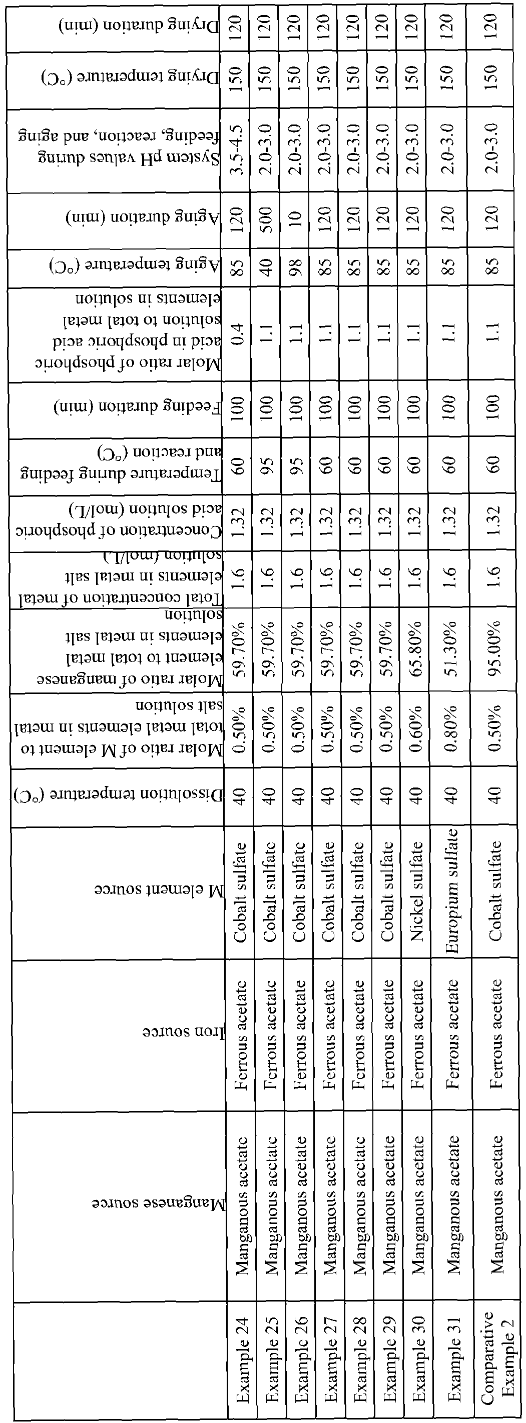

**Table 2: Parameters of precursor materials in Examples 1 to 33 and Comparative Example 2**

| | Chemical formula of compound | Particle size Dᵥ50 (µm) | Compacted density at 30 MPa (g/cm³) | Mass percentage of compound in precursor material |
|---|---|---|---|---|
| Example 1 | Mn_{0.597}Fe_{0.398}Co_{0.005}HPO₄·H₂O | 9.1 | 2.44 | 99.0% |
| Example 2 | Mn_{0.597}Fe_{0.398}Co_{0.005}HPO₄·H₂O | 3.0 | 1.87 | 99.5% |
| Example 3 | Mn_{0.597}Fe_{0.398}Co_{0.005}HPO₄·H₂O | 100.0 | 2.23 | 99.8% |
| Example 4 | Mn_{0.597}Fe_{0.398}Co_{0.005}HPO₄·H₂O | 3.2 | 1.50 | 99.3% |
| Example 5 | Mn_{0.597}Fe_{0.398}Co_{0.005}HPO₄·H₂O | 8.4 | 2.50 | 99.3% |
| Example 6 | Mn_{0.597}Fe_{0.398}Co_{0.005}HPO₄·H₂O | 9.4 | 2.43 | 98.0% |
| Example 7 | Mn_{0.597}Fe_{0.398}Co_{0.005}HPO₄·H₂O | 9.4 | 2.39 | 100.0% |
| Example 8 | Mn_{0.597}Fe_{0.398}Co_{0.005}HPO₄·H₂O | 7.8 | 2.09 | 99.1% |
| Example 9 | Mn_{0.597}Fe_{0.398}Co_{0.005}HPO₄·H₂O | 26.3 | 2.47 | 99.2% |
| Example 10 | Mn_{0.597}Fe_{0.398}Co_{0.005}HPO₄·H₂O | 7.2 | 2.08 | 99.0% |
| Example 11 | Mn_{0.597}Fe_{0.398}Co_{0.005}HPO₄·H₂O | 35.5 | 2.26 | 98.7% |
| Example 12 | Mn_{0.597}Fe_{0.398}Co_{0.005}HPO₄·H₂O | 15.7 | 2.30 | 98.8% |
| Example 13 | Mn_{0.597}Fe_{0.398}Co_{0.005}HPO₄·H₂O | 8.9 | 2.39 | 99.9% |
| Example 14 | Mn_{0.597}Fe_{0.398}Co_{0.005}HPO₄·H₂O | 8.8 | 2.37 | 98.5% |
| Example 15 | Mn_{0.597}Fe_{0.398}Co_{0.005}HPO₄·H₂O | 36.2 | 2.36 | 99.8% |
| Example 16 | Mn_{0.597}Fe_{0.398}Co_{0.005}HPO₄·H₂O | 9.2 | 2.40 | 98.3% |
| Example 17 | Mn_{0.597}Fe_{0.398}Co_{0.005}HPO₄ | 9.0 | 2.48 | 99.7% |
| Example 18 | Mn_{0.597}Fe_{0.398}Mg_{0.005}HPO₄·H₂O | 10.4 | 2.48 | 99.5% |
| Example 19 | Mn_{0.597}Fe_{0.398}Co_{0.005}HPO₄·H₂O | 9.1 | 2.44 | 99.0% |
| Example 20 | Mn_{0.597}Fe_{0.398}Co_{0.005}HPO₄·H₂O | 9.1 | 2.44 | 99.0% |
| Example 21 | Mn_{0.597}Fe_{0.398}Co_{0.005}HPO₄·H₂O | 9.1 | 2.44 | 99.0% |
| Example 22 | Mn_{0.597}Fe_{0.398}Co_{0.005}HPO₄·H₂O | 4.6 | 1.35 | 99.1% |
| Example 23 | Mn_{0.597}Fe_{0.398}Co_{0.005}HPO₄·H₂O | 10.0 | 2.20 | 99.5% |
| Example 24 | Mn_{0.597}Fe_{0.398}Co_{0.005}HPO₄·H₂O | 8.8 | 2.26 | 99.5% |
| Example 25 | Mn_{0.597}Fe_{0.398}Co_{0.005}HPO₄·H₂O | 7.3 | 2.11 | 99.2% |
| Example 26 | Mn_{0.597}Fe_{0.398}Co_{0.005}HPO₄·H₂O | 7.1 | 2.22 | 99.0% |
| Example 27 | Mn_{0.597}Fe_{0.398}Co_{0.005}HPO₄·H₂O | 9.1 | 2.44 | 99.0% |
| Example 28 | Mn_{0.597}Fe_{0.398}Co_{0.005}HPO₄·H₂O | 9.1 | 2.44 | 99.0% |
| Example 29 | Mn_{0.597}Fe_{0.398}Co_{0.005}HPO₄·H₂O | 9.1 | 2.44 | 99.0% |
| Example 30 | Mn_{0.658}Fe_{0.336}Ni_{0.006}HPO₄·H₂O | 9.8 | 2.46 | 99.2% |
| Example 31 | Mn_{0.513}Fe_{0.479}Eu_{0.008}HPO₄·H₂O | 9.5 | 2.33 | 99.5% |
| Example 32 | Mn_{0.597}Fe_{0.398}Co_{0.005}HPO₄·H₂O | 6.9 | 1.46 | 99.0% |
| Example 33 | Mn_{0.597}Fe_{0.398}Co_{0.005}HPO₄·H₂O | 4.8 | 1.83 | 97.9% |
| Comparative Example 2 | Mn_{0.950}Fe_{0.045}Co_{0.005}HPO₄·H₂O | 8.7 | 2.39 | 99.0% |

**Table 3: Preparation parameters of positive electrode materials in Examples 1 to 33 and Comparative Examples 1 and 2**

| | Positive electrode material | | Lithium source | Molar ratio of precursor compound to lithium element | Carbon source | Mass ratio of precursor material to carbon source | Particle size Dᵥ50 of insoluble materials in mixture after grinding (µm) | Drying during preparation of positive electrode material | | Sintering temperature (°C) | Sintering duration (h) |
|---|---|---|---|---|---|---|---|---|---|---|---|
| | Core chemical formula | Coating layer | | | | | | Inlet air temperature (°C) | Outlet air temperature (°C) | | |
| Example 1 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 2 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 3 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 4 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 5 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 6 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 7 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 8 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 9 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 10 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 11 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 12 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 13 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 14 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 15 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 16 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 17 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 18 | LiMn_{0.597}Fe_{0.398}Mg_{0.005}PO₄ | Carbon | Lithium carbonate | 1:1 | Glucose | 1:0.12 | 0.8 | 220 | 105 | 700 | 12 |
| Example 19 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 20 | LiMn_{0.597}Fe_{0.398}Co_{0.005}PO₄ | Carbon | Lithium carbonate | 1:1 | Glucose | 1:0.12 | 0.1 | 220 | 105 | 700 | 12 |
| Example 21 | LiMn_{0.597}Fe_{0.398}Co_{0.005}PO₄ | Carbon | Lithium carbonate | 1:1 | Glucose | 1:0.12 | 5 | 220 | 105 | 700 | 12 |
| Example 22 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 23 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 24 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 25 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 26 | LiMn_{0.597}Fe_{0.398}Co_{0.005}PO₄ | Carbon | Lithium carbonate | 1:1 | Glucose | 1:0.12 | 0.8 | 220 | 105 | 700 | 12 |
| Example 27 | LiMn_{0.597}Fe_{0.398}Co_{0.005}PO₄ | Carbon | Lithium carbonate | 1:1 | Glucose | 1:0.12 | 7 | 220 | 105 | 700 | 12 |
| Example 28 | LiMn_{0.597}Fe_{0.398}Co_{0.005}PO₄ | Carbon | Lithium carbonate | 1:1 | Glucose | 1:0.01 | 0.8 | 220 | 105 | 700 | 12 |
| Example 29 | LiMn_{0.597}Fe_{0.398}Co_{0.005}PO₄ | / | Lithium carbonate | 1:1 | / | / | 0.8 | 220 | 105 | 700 | 12 |
| Example 30 | LiMn_{0.658}Fe_{0.336}Ni_{0.006}PO₄ | Carbon | Lithium carbonate | 1:1 | Glucose | 1:0.12 | 0.8 | 220 | 105 | 700 | 12 |
| Example 31 | LiMn_{0.513}Fe_{0.479}Eu_{0.008}PO₄ | Carbon | Lithium carbonate | 1:1 | Glucose | 1:0.12 | 0.8 | 220 | 105 | 700 | 12 |
| Example 32 | LiMn_{0.597}Fe_{0.398}Co_{0.005}PO₄ | Carbon | Specific preparation methods are as described above. | | | | | | | | |
| Example 33 | LiMn_{0.597}Fe_{0.398}Co_{0.005}PO₄ | Carbon | | | | | | | | | |
| Comparative Example 1 | LiMn_{0.597}Fe_{0.398}Co_{0.005}PO₄ | Carbon | | | | | | | | | |
| Comparative Example 2 | LiMn_{0.950}Fe_{0.045}Co_{0.005}PO₄ | Carbon | Lithium carbonate | 1:1 | Glucose | 1:0.12 | 0.8 | 220 | 105 | 700 | 12 |

### Material test and battery test

### (1) Test of mass percentages of elements in precursor and positive electrode material and chemical formula of compound:

0.2 g of a precursor material or positive electrode material was weighed and placed in a 100 mL beaker, 10 mL of a 10% w/w nitric acid solution was added, followed by heating at 120°C for digestion for 0.5 hours, and diluting to a fixed volume using a 100 mL volumetric flask. Then, 1 mL of the solution was pipetted into a 100 mL volumetric flask using a pipette and diluted to a fixed volume to obtain a solution under test.

An inductively coupled plasma optical emission spectrometer (ICP-OES, instrument brand: Agilent 5800) was used to measure mass percentages of lithium, manganese, iron, phosphorus, and doping elements in the solution under test, and molar ratios of elements in the precursor material or positive electrode material were calculated based on the mass percentages of the elements to determine the chemical formula of the compound.

Based on the measured mass percentage of phosphorus in the precursor material and in combination with the above chemical formula, the mass percentage of the compound in the precursor material was calculated.

### (2) Test of particle size Dᵥ50:

An appropriate amount of a sample was taken, 20 mL of deionized water was added, and ultrasonic treatment was performed for 5 minutes (53 kHz, 120 W) to fully disperse the sample; and a laser particle size analyzer (MasterSizer 2000) was used to test the particle size Dᵥ50 of the material.

### (3) Evaluation of micromorphology and micro-area element distribution:

A scanning electron microscope (SEM, instrument brand: ZEISS sigma 300) was used to observe the micromorphology of the precursor materials of Example 1 and Comparative Example 3.

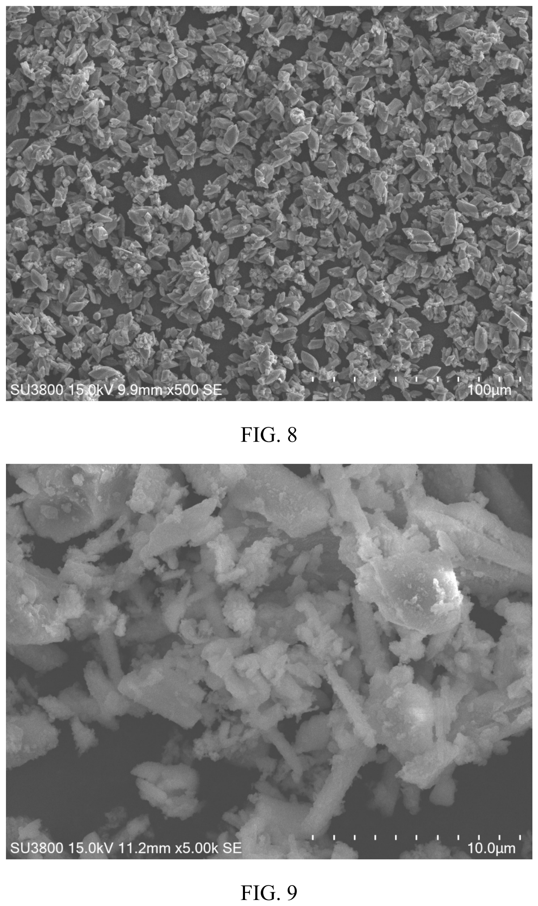

As shown in FIG. 8, the precursor material of Example 1 included primary crystalline particles with polyhedral morphology, with flat and regular crystal faces and few amorphous, honeycomb-like, or dendritic crystals, indicating that the precursor material had high crystallinity.

As shown in FIG. 9, the precursor material obtained in Comparative Example 3 exhibited non-uniform micromorphology, with both needle-like and large particles and uneven particle sizes; no obvious crystal face was observed. Thus, it was inferred that an amorphous precursor material was formed.

An X-ray energy dispersive spectrometer (EDS) was used to characterize the micro-area element distribution of lithium, manganese, iron, phosphorus, and the doping element cobalt in the positive electrode material obtained in Example 1.

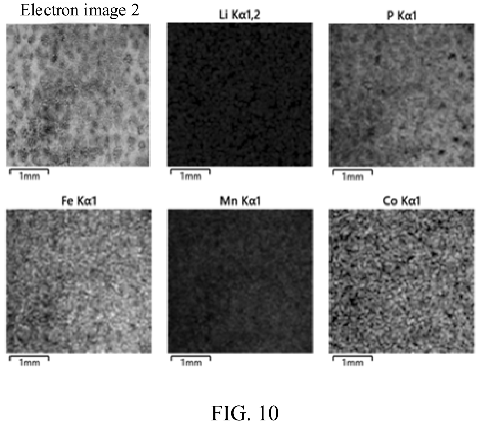

As shown in FIG. 10, the positive electrode material of Example 1 had a relatively uniform distribution of elements.

### (4) Test of compacted density:

0.6000 g of the precursor material was weighed and placed in a mold of a compacted density tester, and the tester automatically applied a pressure of 30 MPa to the powder until the powder was compacted; the volume of the powder was calculated based on the cross-sectional area of the mold and the thickness of the powder at this point; and the compacted density could be tested using the formula: compacted density = mass/volume.

### (5) Test of discharge specific capacity of battery:

A Shenzhen Neware battery testing system was used. A button battery was subjected to charge and discharge cycles at a charge and discharge rate of 0.1 C, where 10 cycles were performed, a test temperature was 25.0°C, and a charge-discharge voltage was 2.0 V to 4.3 V. A discharge specific capacity at the charge and discharge rate of 0.1 C was obtained by dividing a discharge capacity of the first cycle by a mass of a positive electrode material of an electrode plate.

### (6) Test of cycling capacity retention rate of battery:

A Shenzhen Neware battery testing system was used. A button battery was subjected to charge and discharge cycles at a charge and discharge rate of 1 C, where 100 cycles were performed, a test temperature was 25.0°C, and a charge and discharge voltage was 2.0 V to 4.3 V. A percentage of a discharge capacity at the 50th cycle in a discharge capacity at the first cycle was a cycling capacity retention rate.

The test results are shown in Table 4.

**Table 4: Performance test results of Examples 1 to 33 and Comparative Examples 1 and 2**

| | Specific capacity of battery (0.1C) | Cycling capacity retention rate (1.0C, 100 cycles) |
|---|---|---|
| Example 1 | 152.41 | 98.96% |
| Example 2 | 151.58 | 98.52% |
| Example 3 | 150.02 | 98.75% |
| Example 4 | 151.66 | 98.14% |
| Example 5 | 149.13 | 98.83% |
| Example 6 | 152.28 | 98.99% |
| Example 7 | 152.32 | 98.72% |
| Example 8 | 150.03 | 98.46% |
| Example 9 | 150.15 | 98.10% |
| Example 10 | 148.15 | 98.43% |
| Example 11 | 151.90 | 98.72% |
| Example 12 | 148.08 | 98.30% |
| Example 13 | 149.43 | 98.74% |
| Example 14 | 149.70 | 98.58% |
| Example 15 | 148.33 | 98.72% |
| Example 16 | 152.03 | 98.81% |
| Example 17 | 151.97 | 98.65% |
| Example 18 | 150.44 | 98.01% |
| Example 19 | 145.80 | 97.67% |
| Example 20 | 152.39 | 98.11% |
| Example 21 | 139.90 | 97.38% |
| Example 22 | 143.77 | 98.60% |
| Example 23 | 139.85 | 97.70% |
| Example 24 | 142.90 | 98.51% |
| Example 25 | 142.47 | 97.95% |
| Example 26 | 142.44 | 97.85% |
| Example 27 | 116.64 | 96.66% |
| Example 28 | 112.99 | 85.30% |
| Example 29 | 86.06 | 80.04% |
| Example 30 | 143.16 | 97.20% |
| Example 31 | 148.90 | 98.53% |
| Example 32 | 135.77 | 98.13% |
| Example 33 | 137.43 | 97.33% |
| Comparative Example 1 | 132.18 | 98.41% |
| Comparative Example 2 | 72.96 | 49.84% |

### From the above results, it can be seen that:

As compared with Comparative Example 1 in which no precursor material was prepared and the positive electrode material was prepared using a conventional method, the specific capacities of the batteries in Examples 1 to 26 of this application were significantly increased.

As compared with Comparative Example 2 in which the precursor material of this application was not used, the specific capacities and cycling capacity retention rates of the batteries in Examples 1 to 33 of this application were significantly increased.

As compared with Example 32 in which the materials were all added at once and no aging was performed during preparation of the precursor material, the specific capacities of the batteries in Examples 1 to 26 of this application were significantly increased.

As compared with Example 33 in which inorganic raw materials were used during preparation of the precursor material, the specific capacities and cycling capacity retention rates of the batteries in Examples 1 to 26 of this application were significantly increased.

As compared with Example 22, in which a lower compacted density of the precursor material was used, the specific capacities of the batteries in Examples 1, 4, and 5 of this application were higher.

As compared with Example 23 in which a higher temperature during feeding and reaction was used during preparation of the precursor material, the specific capacities and cycling capacity retention rates of the batteries in Examples 1, 8, and 9 of this application were higher.

As compared with Example 24 in which a lower molar ratio of the phosphoric acid to the total metal elements during preparation of the precursor, the specific capacities of the batteries in Examples 1 and 10 to 13 of this application were higher.

As compared with Example 25 in which a lower aging temperature and a longer aging duration were used during preparation of the precursor material, the specific capacities and cycling capacity retention rates of the batteries in Examples 1, 14, and 15 of this application were higher. As compared with Example 26 in which a higher aging temperature and a shorter aging duration were used during preparation of the precursor material, the specific capacities and cycling capacity retention rates of the batteries in Examples 1, 14, and 15 of this application were higher.

As compared with Example 27 in which a larger particle size Dᵥ50 of insoluble materials after grinding was used during preparation of the positive electrode material, the specific capacities and cycling capacity retention rates of the batteries in Examples 1, 20, and 21 of this application were higher.

As compared with Example 28 in which a smaller amount of carbon source was used during preparation of the positive electrode material, the specific capacities and cycling capacity retention rates of the batteries in Examples 1 and 19 of this application were higher.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, within the scope without departing from the essence of this application, various modifications made to the embodiments that can be conceived by persons skilled in the art, and other manners constructed by combining some of the constituent elements in the embodiments are also included in the scope of this application.

## Claims

1. A precursor material, comprising a compound MnₓFe_{y}M_{(1-x-y)}HPO₄·nH₂O, wherein 0.9 ≤ x+y < 1, 0 < x ≤ 0.9, 0 < y ≤ 0.9, 0 ≤ n ≤ 6, and M comprises one or more of transition metal elements other than manganese and iron, Group IIA metal elements, Group IIIA metal elements, and Group IVA metal elements.

2. The precursor material according to claim 1, wherein 0.992 ≤ x+y < 0.995; and/or 0.513 ≤ x ≤ 0.658; and/or 0.336 ≤ y ≤ 0.479; and/or 0 ≤ n ≤ 1.

3. The precursor material according to claim 1 or 2, wherein M comprises one or more elements of titanium, magnesium, aluminum, vanadium, zinc, cobalt, nickel, tin, niobium, tungsten, zirconium, tantalum, cerium, and europium.

4. The precursor material according to any one of claims 1 to 3, wherein a particle size Dᵥ50 of the precursor material is 3 µm to 100 µm, optionally 5 µm to 50 µm, and more optionally 8 µm to 20 µm; and/or
a compacted density of the precursor material at 30 MPa is 1.35 g/cm³ to 2.5 g/cm³; and/or
a mass percentage of the compound MnₓFe_{y}M_{(1-x-y)}HPO₄·nH₂O in the precursor material is 98% to 100%; and/or
the precursor material comprises primary crystalline particles with polyhedral morphology.

5. A method for preparing a precursor material, comprising the following steps:
dissolving a soluble manganese source, a soluble iron source, and a soluble source of an M element in a solvent to obtain a solution;
slowly adding the solution to a phosphoric acid solution for reaction, optionally followed by aging, to obtain a reaction product; and
filtering the reaction product and drying the resulting filter residue to obtain a precursor material; wherein
the precursor material comprises a compound MnₓFe_{y}M_{(1-x-y)}HPO₄·nH₂O, wherein 0.9 ≤ x+y < 1, 0 < x ≤ 0.9, 0 < y ≤ 0.9, 0 ≤ n ≤ 6, and the M element comprises one or more of transition metal elements other than manganese and iron, Group IIA metal elements, Group IIIA metal elements, and Group IVA metal elements, optionally comprising one or more elements of titanium, magnesium, aluminum, vanadium, zinc, cobalt, nickel, tin, niobium, tungsten, zirconium, tantalum, cerium, and europium.

6. The method according to claim 5, wherein the soluble manganese source comprises one or more of a soluble organic manganese source and a soluble inorganic manganese source, optionally comprising a soluble organic manganese source, more optionally comprising one or more of soluble organic acid salts of manganese, and further optionally comprising one or more of manganous acetate, manganous formate, manganous citrate, and manganous 2-hydroxypropionate; and/or
the soluble iron source comprises one or more of a soluble organic iron source and a soluble inorganic iron source, optionally comprising a soluble organic iron source, more optionally comprising one or more of soluble organic acid salts of iron, and further optionally comprising one or more of ferrous acetate, ferrous formate, ferrous citrate, and ferrous 2-hydroxypropionate; and/or
the soluble source of the M element comprises one or more of a soluble inorganic source of the M element and a soluble organic source of the M element, optionally comprising one or more of soluble organic acid salts and soluble inorganic acid salts of the M element, and more optionally comprising one or more of sulfates, nitrates, chlorides, formates, acetates, citrates, and 2-hydroxypropionates of the M element.

7. The method according to claim 5 or 6, wherein the solution is slowly added to the phosphoric acid solution for reaction at 25°C to 95°C; and/or
a feeding duration of the solution is 10 min to 300 min, optionally 15 min to 300 min, and more optionally 60 min to 180 min; and/or
a molar ratio of a phosphoric acid in the phosphoric acid solution to the total metal elements in the solution is 0.4 to 1.5, optionally 0.5 to 1.5, and more optionally 0.8 to 1.2; and/or
a total concentration of metal elements in the solution is 0.1 mol/L to 3.0 mol/L, optionally 0.5 mol/L to 2.5 mol/L, and more optionally 1.0 mol/L to 2.0 mol/L; and/or
a concentration of the phosphoric acid in the phosphoric acid solution is 0.1 mol/L to 3.0 mol/L, optionally 0.5 mol/L to 2.5 mol/L, and more optionally 1.0 mol/L to 2.0 mol/L; and/or
a molar amount of the M element in the solution accounts for 0.1% to 10% of a total molar amount of metal elements; and/or
a molar amount of the Mn element in the solution accounts for 30% to 85% of the total molar amount of metal elements.

8. The method according to any one of claims 5 to 7, wherein
an aging temperature is 40°C to 98°C; and/or
an aging duration is 10 min to 500 min; and/or
the reaction and/or aging is performed under a condition with a pH value of 1.5 to 4.5; and/or
the reaction and/or aging is performed under a stirring condition.

9. The method according to any one of claims 5 to 8, wherein
the dissolving is performed at 25°C to 80°C; and/or
the solvent is water; and/or
the filtering is vacuum filtering, positive-pressure filtering, or centrifugal filtering; and/or
before the drying, the filter residue is washed, and optionally, the filter residue is washed with water; and/or
a drying temperature is 80°C to 500°C, optionally 120°C to 400°C, and more optionally 150°C to 300°C; and/or
a drying duration is 10 min to 300 min.

10. A positive electrode material, comprising a compound LiMnₓFe_{y}M_{(1-x-y})PO₄, wherein 0.9 ≤ x+y < 1, 0 < x ≤ 0.9, 0 < y ≤ 0.9, and M comprises one or more of transition metal elements other than manganese and iron, Group IIA metal elements, Group IIIA metal elements, and Group IVA metal elements, optionally comprising one or more elements of titanium, magnesium, aluminum, vanadium, zinc, cobalt, nickel, tin, niobium, tungsten, zirconium, tantalum, cerium, and europium; and
raw materials for preparing the positive electrode material comprise the precursor material according to any one of claims 1 to 4 or a precursor material prepared by the method according to any one of claims 5 to 9.

11. A positive electrode material, comprising a core and a coating layer, wherein the core comprises a compound LiMnₓFe_{y}M_{(1-x-y)}PO₄, wherein 0.9 ≤ x+y < 1, 0 < x ≤ 0.9, 0 < y ≤ 0.9, and M comprises one or more of transition metal elements other than manganese and iron, Group IIA metal elements, Group IIIA metal elements, and Group IVA metal elements, optionally comprising one or more elements of titanium, magnesium, aluminum, vanadium, zinc, cobalt, nickel, tin, niobium, tungsten, zirconium, tantalum, cerium, and europium; and the coating layer comprises carbon; and
raw materials for preparing the positive electrode material comprise the precursor material according to any one of claims 1 to 4 or a precursor material prepared by the method according to any one of claims 5 to 9.

12. A method for preparing a positive electrode material, comprising the following steps:
mixing the precursor material according to any one of claims 1 to 4 or a precursor material prepared by the method according to any one of claims 5 to 9 with a lithium source in a solvent, grinding, drying, and sintering to obtain a positive electrode material; wherein
the positive electrode material comprises a compound LiMnₓFe_{y}M_{(1-x-y)}PO₄, wherein 0.9 ≤ x+y < 1, 0 < x ≤ 0.9, 0 < y ≤ 0.9, and M comprises one or more of transition metal elements other than manganese and iron, Group IIA metal elements, Group IIIA metal elements, and Group IVA metal elements, optionally comprising one or more elements of titanium, magnesium, aluminum, vanadium, zinc, cobalt, nickel, tin, niobium, tungsten, zirconium, tantalum, cerium, and europium.

13. A method for preparing a positive electrode material, comprising the following steps:
mixing the precursor material according to any one of claims 1 to 4 or a precursor material prepared by the method according to any one of claims 5 to 9 with a lithium source and a carbon source in a solvent, grinding, drying, and sintering to obtain a positive electrode material; wherein
the positive electrode material comprises a core and a coating layer; the core comprises a compound LiMnₓFe_{y}M_{(1-x-y)}PO₄, wherein 0.9 ≤ x+y < 1, 0 < x ≤ 0.9, 0 < y ≤ 0.9, and M comprises one or more of transition metal elements other than manganese and iron, Group IIA metal elements, Group IIIA metal elements, and Group IVA metal elements, optionally comprising one or more elements of titanium, magnesium, aluminum, vanadium, zinc, cobalt, nickel, tin, niobium, tungsten, zirconium, tantalum, cerium, and europium; and the coating layer comprises carbon.

14. The method according to claim 12 or 13, wherein a molar ratio of the compound MnₓFe_{y}M_{(1-x-y)}HPO₄·nH₂O in the precursor material to a lithium element in the lithium source is 1:(1.0 to 1.1); and/or
a mass ratio of the precursor material to the carbon source is 1:(0.01 to 0.2); and/or
a particle size Dᵥ50 of insoluble materials in the mixture obtained after grinding is 0.1 µm to 7.0 µm, optionally 0.1 µm to 5.0 µm; and/or
the drying is performed using a spray dryer, wherein the spray dryer has an inlet air temperature of 180°C to 350°C and an outlet air temperature of 90°C to 130°C; and/or
a sintering temperature is 450°C to 800°C; and/or
a sintering duration is 6 h to 20 h; and/or
the sintering is performed in an inert atmosphere.

15. A positive electrode plate, comprising the positive electrode material according to claim 10 or 11, or a positive electrode material prepared by the method according to any one of claims 12 to 14.

16. A battery, comprising the positive electrode plate according to claim 15.

17. An electric apparatus, comprising the battery according to claim 16.
